# EUROPÄISCHE PATENTSCHRIFT

(11) **EP 3 742 047 B1**
(45) Veröffentlichungstag und Bekanntmachung des Hinweises auf die Patenterteilung: **07.07.2021**
(21) Anmeldenummer: 19175515.6
(22) Anmeldetag: 21.05.2019
(51) Int. Cl.: F21V 17/02, F21V 14/06, F21V 5/00

(54) **OPTIKSYSTEM FÜR STRAHLERLEUCHTE**
OPTICAL SYSTEM FOR SPOTLIGHT
SYSTÈME OPTIQUE POUR PROJECTEUR

(43) Veröffentlichungstag der Anmeldung: 25.11.2020
(73) Patentinhaber: Zumtobel Lighting GmbH, 32657 Lemgo (DE)
(72) Erfinder: Eidam, Michael, 31812 Bad Pyrmont (DE)
(74) Vertreter: Kiwit, Benedikt

(56) Entgegenhaltungen:
- WO-A1-99/67569
- WO-A1-2004/001287
- DE-A1- 2 757 614
- JP-A- 2004 119 045
- US-A1- 2011 305 007
- US-B1- 6 174 071

## Beschreibung

Die vorliegende Erfindung betrifft ein Optiksystem für Strahlerleuchten, ein Leuchtensystem mit einer Strahlerleuchte und einem erfindungsgemäßen Optiksystem, sowie ein Verfahren zur Einstellung einer Lichtabgabecharakteristik einer Strahlerleuchte eines erfindungsgemäßen Leuchtensystems.

US 2011 / 0 305 007 A1 zeigt einen Strahler mit einer einstellbaren Lichtverteilung. Dazu umfasst der Strahler ein Gehäuse, eine im Gehäuse angeordnete Leuchtdiode (LED), die Licht durch eine distale Öffnung im Gehäuse ausgibt, eine achromatische erste Linse, die in der Öffnung im Gehäuse montiert ist, und eine zweite Linse, die zwischen der LED und der achromatischen ersten Linse angeordnet ist. Der Abstand zwischen der ersten und zweiten Linse ist einstellbar.

Grundsätzlich sind Strahlerleuchten und dafür verwendbare Optiken bekannt, um die Lichtabgabecharakteristik derartiger Leuchten entsprechend zu verändern. So lassen sich beispielsweise Ausstrahlwinkel von Strahlerleuchten mittels eines Zoomobjektivs einstellen. Strahlerleuchten geben in der Regel einen mehr oder weniger engen Lichtkegel ab. Dieser hat meist einen harten Rand; dies unabhängig vom Zoom des Ausstrahlwinkels mittels eines Zoomobjektivs.

Es ist nunmehr eine Aufgabe der vorliegenden Erfindung, ein Optiksystem für Strahlerleuchten bereitzustellen, mittels dem die Lichtabgabecharakteristik einer Strahlerleuchte auf neuartige Weise und bei einfacher Bedienung ermöglicht werden kann.

Gemäß einem ersten Aspekt betrifft die vorliegende Erfindung ein Optiksystem für Strahlerleuchten, welches ein erstes Optikelement und ein zweites Optikelement, welche entlang einer Längsachse bzw. Lichtabstrahlachse optisch hintereinander angeordnet sind, und einen Verstellmechanismus aufweist. Der Verstellmechanismus ist mit dem ersten Optikelement und dem zweiten Optikelement derart gekoppelt, um die Optikelemente derart entlang der Lichtabstrahlachse zu bewegen, so dass die Optikelemente zwischen einer beabstandeten Position, in der die Optikelemente entlang der Lichtabstrahlachse zueinander beabstandet sind, und einer benachbarten Position, in der die Optikelemente im Vergleich zu der beabstandeten Position näher zueinander angeordnet sind, relativ zueinander bewegbar sind. Der Verstellmechanismus ist ferner mit dem ersten Optikelement und dem zweiten Optikelement derart gekoppelt, um die Optikelemente, wenn diese sich in der benachbarten Position befinden, unter Beibehaltung der benachbarten Position entlang der Lichtabstrahlachse zusammen bewegbar sind.

Mittels eines derart bereitgestellten Optiksystems kann es unter Verwendung von beliebig ausgewählten Optikelemente zu einer definierten Einstellung einer Strahlerleuchte kommen. Insbesondere soll es ermöglicht werden, durch relative Bewegung der Optikelemente zueinander die optische Funktion wenigstens eines oder auch beider Optikelemente relativ zueinander einzustellen. Durch die Ermöglichung der dann gemeinsamen Bewegung der Optikelemente entlang der Lichtabstrahlachse können diese Effekte der beiden Optikelemente in bevorzugter Weise gemeinsam genutzt und eingestellt werden. So kann, je nach verwendeten Optikelementen, unterschiedliche Funktionen erzielt werden, wie dies im Folgenden beispielhaft noch bezüglich bevorzugter Ausgestaltungsformen der Optikelemente beschrieben wird.

Der Verstellmechanismus kann derart ausgebildet sein, dass zur relativen Bewegung der Optikelemente zwischen der beabstandeten und der benachbarten Position nur eines der Optikelemente, vorzugsweise das zweite Optikelement, bewegbar ist. Hierzu kann das eine Optikelement bevorzugt zwischen einer ersten Position, in der es sich bezüglich des anderen Optikelements in der beabstandeten Position befindet, und einer zweiten Position, in der es sich bezüglich des anderen Optikelements in der benachbarten Position befindet, bewegbar sein. Dies ermöglicht es, die Einstellungen hier beispielsweise des ersten Optikelements zunächst unbeeinflusst zu lassen und das Optiksystem zunächst nur bezüglich des zweiten Optikelements zu justieren.

Der Verstellmechanismus kann ferner derart ausgebildet sein, dass das eine Optikelement, wenn sich die Optikelemente in der benachbarten Position befinden, unter Beibehaltung der benachbarten Position entlang der Lichtabstrahlachse von der zweiten zu der ersten Position und vorzugsweise zwischen der ersten und zweiten Position bewegbar ist. Auf diese Weise kann neben der Justage des zweiten Optikelements in einem weiteren Funktionsbereich die gemeinsame Einstellung beider Optikelemente bewirkt werden, wobei das zweite Optikelement vorzugsweise auch bei der gemeinsamen Einstellung über seinen gesamten Funktionsbereich, den dieses auch bei der zu dem ersten Optikelement unabhängigen Bewegung fährt, bewegt werden kann.

Das Optiksystem kann einen Befestigungsabschnitt aufweisen. Dieser kann vorzugsweise bezüglich der Lichtabstrahlachse an einer dem einen Optikelement zugewandten Seite vorgesehen sein. Der Befestigungsabschnitt ist bevorzugt derart ausgestaltet, um das Optiksystem derart mit einer Leuchte zu verbinden, so dass das Licht der Leuchte in Richtung der Lichtabstrahlachse beide Optikelemente nacheinander, vorzugsweise zunächst das zweite Optikelement und dann das erste Optikelement (alternativ auch andersherum), durchlaufen kann. Mithin kann das Optikelement bewegbar ist, um die Optikelemente zwischen der beabstandeten Position und der benachbarten Position zu bewegen, dieses vorzugsweise in einer Richtung von dem Befestigungsabschnitt weg und zu diesem hin bewegbar ist und, wenn sich die beiden Optikelement unter Beibehaltung der benachbarten Position entlang der Lichtabstrahlachse zusammen bewegen, diese gemeinsam sich zu dem Befestigungsabschnitt hin und von diesem weg bewegen können. Mittels des Befestigungsabschnitts wird somit eine sichere Aufnahme des Optiksystems bezüglich einer Leuchte bereitgestellt. Diese soll es bevorzugt ermöglichen, dass Optiksystem und die Leuchte somit gleichzeitig zueinander auszurichten, um eine optimale Lichtabgabe und Einstellung der Lichtabgabecharakteristik zu ermöglichen.

Die Optikelemente weisen jeweils Führungsstifte auf, welche sich bevorzugt radial von dem jeweiligen Optikelement erstrecken; besonders bevorzugt radial nach außen erstrecken. Der Verstellmechanismus weist hierzu ein Führungselement mit ersten und zweiten Führungsnuten auf, wobei die Führungsstifte des ersten Optikelements derart mit den ersten Führungsnuten und die Führungsstifte des zweiten Optikelements derart mit den zweiten Führungsnuten zusammenwirken, vorzugsweise in diese eingreifen, um die Optikelemente über eine Rotation relativ zu dem Führungselement bezüglich der Lichtabstrahlachse zu bewegen. Somit kann auf einfache Weise eine Kopplung zwischen den Optikelementen und dem Verstellmechanismus bereitgestellt werden. Durch die Ausgestaltung der Trajektorien bzw. Führungsnuten in einem Führungselement, in das Führungsstifte eines Optikelements eingreifen, sorgt für eine einfache und gezielte Führung und somit entsprechende Bewegung der Optikelemente entlang der Lichtabstrahlachse, wie dies oben beschrieben ist.

Die Führungsnuten können in einem ersten Abschnitt zueinander abgewinkelt verlaufen, um die Optikelemente mittels des Verstellmechanismus zwischen der beabstandeten und der benachbarten Position zu bewegen. Die Führungsnuten können ferner in einem zweiten Abschnitt zueinander parallel verlaufen, um die Optikelemente mittels des Verstellmechanismus unter Beibehaltung der benachbarten Position entlang der Lichtabstrahlachse zusammen zu bewegen. Auf diese Weise können einfache Führungselemente in einfacher Weise bereitgestellt werden. Diese lassen sich zudem leicht herstellen, sodass insgesamt eine kostengünstige Fertigung bei einfachem Aufbau ermöglicht ist.

In dem ersten Abschnitt können die ersten Führungsnuten des ersten Optikelements, vorzugsweise des weiteren Optikelements, im Wesentlichen in einer orthogonal zur Lichtabstrahlachse stehenden Ebene um die Lichtabstrahlachse verlaufen, und die zweiten Führungsnuten des zweiten Optikelements, vorzugsweise des einen Optikelements, abgewinkelt und um die Lichtabstrahlachse verlaufen. In dem zweiten Abschnitt können die Führungsnute beider Optikelemente parallel zueinander sowie abgewinkelt zur und um die Lichtabstrahlachse verlaufen, vorzugsweise bezüglich einer die Lichtabstrahlachse aufweisenden Ebene gespiegelt zur zweiten Führungsnut im ersten Abschnitt. Auf diese Weise kann eine besonders einfache und klare Nutführung zur entsprechenden Bewegung der Optikelemente mittels des Verstellmechanismus bereitgestellt werden. Insbesondere kann es somit erzielt werden, dass bei einer Bewegung der Optikelemente im ersten Abschnitt lediglich das zweite Optikelement aufgrund der abgewinkelten Ausrichtung seiner Führungsnute bewegt wird, während das erste Optikelement bezüglich der Lichtabstrahlachse in derselben Ebene verweilt, während die beiden Optikelemente dann im zweiten Abschnitt gemeinsame und hier bevorzugt entgegen der Richtung des zweiten Optikelements im ersten Abschnitt verfahren.

Das Führungselement kann einen Kulissenring aufweisen, welcher sich entlang der Lichtabstrahlachse erstreckt und die Führungsnuten aufweist. Somit kann ein einfaches Bauteil kostengünstig bereitgestellt werden.

Das Führungselement kann einen exponierten Manipulationsabschnitt aufweisen, mittels welchem das Führungselement zum Bewirken der relativen Rotation greifbar ist. Auf diese Weise kann das Führungselement von einem Bediener einfach bedient werden. Der Manipulationsabschnitt kann dabei entsprechende, die Griffigkeit erhöhende Merkmale oder Strukturen aufweisen, wie beispielsweise eine Riffelung oder eine die Reibung erhöhende Beschichtung.

Der Verstellmechanismus kann ein Halteelement aufweisen, welches bezüglich der Lichtabstrahlachse relativ drehbar zu dem Führungselement vorgesehen ist. Das Haltelement kann mit den Optikelementen und vorzugsweise deren Führungsstiften derart gekoppelt sein, um die Optikelemente bezüglich des Halteelements rotatorisch zu fixieren und axial bewegbar zu lagern. Auf diese Weise kann es erzielt werden, dass die Optikelemente in einfacher Weise bezüglich der Führungsnuten manipuliert bzw. geführt werden können. Das Halteelement ermöglicht somit auf einfache Weise eine relative Drehung der Optikelemente bezüglich des Führungselements, um eben die Optikelemente entsprechend zu bewegen und bevorzugt in den Führungsnuten zu führen.

Das Halteelement kann hierzu weitere Führungsnute aufweisen, welche sich bevorzugt parallel zur Lichtabstrahlachse erstrecken. Die und/oder weitere Führungsstifte der Optikelemente können nun derart mit den weiteren Führungsnuten zusammenwirken, vorzugsweise in diese eingreifen, sodass diese entlang der Lichtabstrahlachse frei bewegbar gelagert sind und die Optikelemente durch relative Rotation von dem Halteelement und dem Führungselement in den jeweiligen Führungsnuten bewegt werden. Mit anderen Worten dient/dienen folglich die weitere(n) Führungsnut(e) des Halteelements als Drehmomentstütze.

Das Halteelement kann einen Führungsring aufweisen, welcher sich entlang der Lichtabstrahlachse erstreckt und die weiteren Führungsnuten aufweist. Vergleichbar dem Kulissenring kann somit dieses Bauteil ebenso in einfacher und kostengünstiger Weise bereitgestellt werden.

Wie auch das Führungselement, so kann auch das Halteelement einen exponierten weiteren Manipulationsabschnitt aufweisen, mittels welchem das Halteelement zum Bewirken der relativen Rotation greifbar ist. Der weitere Manipulationsabschnitt kann dabei dem Manipulationsabschnitt des Führungselements entsprechend ausgestaltet sein.

Der Verstellmechanismus kann des Weiteren ein Gehäuseelement aufweisen, welches den Verstellmechanismus im Wesentlichen radial außen begrenzt, vorzugsweise das Führungselement und das Halteelement im Wesentlichen außen umfangsseitig umgibt. Mit anderen Worten bildet das Gehäuseelement somit bevorzugt ein tragendes und vor allem schützendes Bauteil für das gesamte Optiksystem.

Das Gehäuseelement kann einen Gehäusering aufweisen, welcher sich entlang der Lichtabstrahlachse erstreckt. Somit kann, vergleichbar dem Kulissenring und dem Führungsring, auch das Gehäuseelement in einfacher und kostengünstiger Weise bereitgestellt werden.

Das Gehäuseelement kann bevorzugt mit dem Führungselement oder dem Halteelement drehfest gekoppelt sein. Somit kann das Gehäuseelement als weiteres Manipulationsbauteil für eben das mit diesem drehfest gekoppelten Element dienen.

Der exponierte Manipulationsabschnitt und/oder der exponierte weitere Manipulationsabschnitt kann/können von dem Gehäuseelement vorzugsweise axial vorstehen, sodass dieser gut von einem Bediener greifbar ist. In einer besonders bevorzugten Ausgestaltungsform können die beiden Manipulationsabschnitte an gegenüberliegenden axialen Enden des Gehäuseelements angeordnet sein. Hierzu ragen die Manipulationsabschnitte bevorzugt (leicht) radial über das Gehäuseelement und ggf. radial nach außen von diesem vor. Insgesamt sind die Manipulationsabschnitte bevorzugt derart vorgesehen, dass sie einfach von einem Bediener gegriffen und zur Rotation der Elemente des Verstellmechanismus gegriffen werden können, um die Bedienbarkeit des Optiksystems möglichst einfach zu gestalten.

Das erste Optikelement kann eine optische Linse, vorzugsweise ein Fresnel-Linse, aufweisen. Die Linse kann bevorzugt in einem Linsenträger (bspw. ein die Linse außen umfangsseitig umgebender Ring) gehalten sein. Der Linsenträger kann dabei besonders bevorzugt die Führungsstifte des ersten Optikelements aufweisen. Durch Ausgestaltung des ersten Optikelements als optische Linse ist es beispielsweise möglich, die Strahlerleuchte mittels einer Zoomfunktion auszustatten. Durch das Bewegen des ersten Optikelements entlang der Lichtabstrahlachse kann dieses somit bezüglich einer mit dem Optiksystem verbundenen Strahlerleuchte derart bewegt werden, dass beispielsweise ein Ausstrahlwinkel verringert oder erweitert wird, um somit eben einen Zoomeffekt zu erzielen.

Das zweite Optikelement weist bevorzugt eine Streuscheibe, besonders bevorzugt eine Diffusionsscheibe auf. Die Streuscheibe kann bevorzugt in einem Träger (bspw. ein die Streuscheibe außen umfangsseitig umgebender Ring) gehalten sein. Besonders bevorzugt kann der Träger die Führungsstifte des zweiten Optikelements aufweisen. Durch Bereitstellung des zweiten Optikelements in Form einer Streuscheibe kann es ermöglicht werden, beispielsweise die Schärfe eines Lichtkegels im Randbereich wahlweise aufzuweichen und somit einen sogenannten "Beamshaping" Effekt zu erzielen.

Die optische Linse in Kombination mit der Streuscheibe ermöglicht es erstmals, eine Einstellung des Randbereichs eines Lichtkegels (Beamshaping) sowohl bei einem festen Ausstrahlwinkel als auch gleichzeitig zusammen mit der Einstellung des Ausstrahlwinkels (Zoom) in nur einer einzigen Einstellbewegung zu bewirken. Dies erhöht zum einen die Variabilität einer mit diesem Optiksystem ausgestatteten Leuchte bei gleichzeitig einfacher Bedienung.

Die Optikelemente sind bevorzugt koaxial zueinander ausgerichtet. Ebenso können Führungselement und Halteelement und ferner bevorzugt auch das Gehäuseelement zueinander koaxial ausgerichtet sein. Führungselement und Halteelement und ferner bevorzugt auch das Gehäuseelement weisen besonders bevorzugt einen im Wesentlichen zylindrische Form auf. Ferner bevorzugt sind auch die Optikelemente zu dem Verstellmechanismus, vorzugsweise zu dem Führungselement und Halteelement und ferner bevorzugt auch zu dem Gehäuseelement, koaxial ausgerichtet.

Gemäß einem weiteren Aspekt betrifft die vorliegende Erfindung ferner ein Leuchtensystem mit einer Strahlerleuchte und einem Optiksystem gemäß der vorliegenden Erfindung. Das Optiksystem ist dabei derart zur Strahlerleuchte angeordnet, vorzugsweise sind diese über den Befestigungsabschnitt miteinander derart verbunden, dass Licht der Strahlerleuchte in Richtung der Lichtabstrahlachse zunächst das zweite Optikelement und dann das erste Optikelement durchläuft. Grundsätzlich ist es auch denkbar, dass der Befestigungsabschnitt auf der anderen (axialen) Seite bereitgestellt ist bzw. das Optiksystem derart zur Strahlerleuchte angeordnet ist, sodass das Licht der Stahlerleuchte in Richtung der Lichtabstrahlachse zunächst das erste Optikelement und dann das zweite Optikelement durchläuft. Das Leuchtensystem kann, je nach gewünschtem Effekt, entsprechend angeordnet und ausgebildet werden.

Die Strahlerleuchte kann bevorzugt eine LED-Strahlerleuchte sein. Mithin weist also die Strahlerleuchte LED-Mittel auf. Diese können einzelne LEDs oder beliebige LED-Module sein.

Gemäß einem weiteren Aspekt betrifft die vorliegende Erfindung ein Verfahren zur Einstellung einer Lichtabgabecharakteristik einer Strahlerleuchte eines Leuchtensystems gemäß der vorliegenden Erfindung. Dieses weist die Schritte zum Bereitstellen dieses Leuchtensystems sowie zum Betätigen des Verstellmechanismus, bevorzugt durch relative Drehung von Führungselement und Halteelement, auf, sodass die Optikelemente zwischen der beabstandeten Position und der benachbarten Position und, wenn sich die Optikelemente in der benachbarten Position befinden, diese wahlweise unter Beibehaltung der benachbarten Position entlang der Lichtabstrahlachse zusammen bewegt werden können.

Mittels dieses Verfahrens, welches insbesondere auf dem erfindungsgemäßen Optiksystem beruht, kann somit eine Lichtabgabecharakteristik einer Strahlerleuchte in besonders einfacher Weise eingestellt werden, wie dies zuvor bereits beschrieben wurde.

Des Weiteren ist es denkbar, dass ausschließlich das zweite Optikelement bewegt wird, um die Optikelemente zwischen der beabstandeten Position und der benachbarten Position zu bewegen. Hierzu kann das zweite Optikelement bevorzugt relativ zur Strahlerleuchte wahlweise von dieser weg oder zu dieser hin bewegt werden; mithin also in einer Richtung von dieser weg oder zu dieser hin. Auf diese Weise kann zumindest in einem ersten Einstellbereich unter Beibehaltung der optischen Funktion des ersten Optikelements eine Einstellung der Lichtabgabe einzig mittels des zweiten Optikelements bewirkt werden. Beispielsweise kann so bei gegebenem Lichtkegel einer Strahlerleuchte beispielsweise der Randbereich wahlweise optisch aufgeweicht werden.

Wenn sich die beiden Optikelemente unter Beibehaltung der benachbarten Position entlang der Lichtabstrahlachse zusammen bewegen, können beide Optikelemente relativ zur Strahlerleuchte wahlweise von dieser weg oder zu dieser hin bewegt werden; mithin also in einer Richtung von dieser weg oder zu dieser hin. Dieser zweite Einstellungsschritt soll es ermöglichen, die Einstellfunktion der beiden Optikelemente gekoppelt umzusetzen, um somit beispielsweise einen Lichtkegel im Randbereich (Beamshaping) sowie den Ausstrahlwinkel (Zoom) mit einer einzigen Einstellbewegung zu steuern.

Im Folgenden werden weitere Vorteile und Ausgestaltungen der vorliegenden Erfindung anhand von einem Ausführungsbeispiel gemäß der Figuren der begleitenden Zeichnungen beschrieben. Es zeigen:
- Figur 1: eine perspektivische Ansicht eines Leuchtensystems gemäß einem ersten Ausführungsbeispiel der vorliegenden Erfindung,

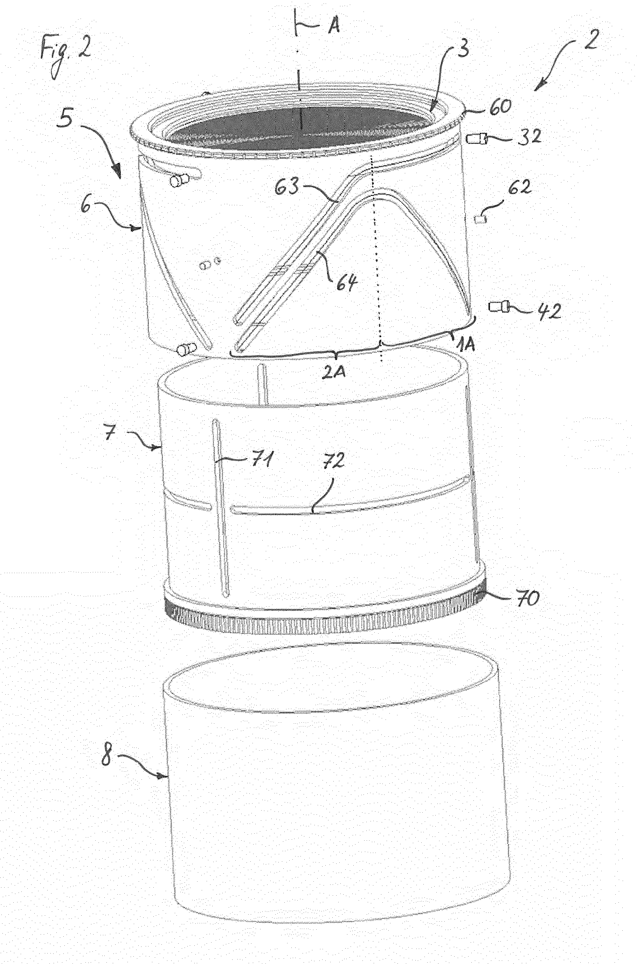

- Figur 2: eine perspektivische Explosionsdarstellung eines Optiksystems eines Leuchtensystems gemäß Figur 1,
- Figur 3: eine perspektivische Schnittansicht der Darstellung gemäß Figur 2,
- Figur 4: ein Führungselement (Kulissenring) eines Optiksystems gemäß Figur 2,
- Figur 5: eine perspektivische Schnittdarstellung des Führungselements gemäß Figur 4,
- Figur 6: eine perspektivische Schnittdarstellung eines Optiksystems gemäß Figur 1 in einer ersten Einstellposition der Optikelemente in einer beabstandeten Position, hier beispielsweise zur Erzeugung eines engen Ausstrahlwinkels bei hartem Randbereich,
- Figur 7: eine perspektivische Schnittansicht des Optiksystems gemäß Figur 6 in einer zweiten Einstellposition der Optikelemente in benachbarter Position, hier in einem von einem Lichteintrittsbereich abgewandten Ende, um beispielsweise bei engem Ausstrahlwinkel einen weichen Randbereich zu erhalten, und
- Figur 8: eine perspektivische Schnittansicht eines Optiksystems gemäß Figur 6 in einer dritten Einstellposition der Optikelemente in benachbarter Position an einem dem Lichteintrittsbereich zugewandten Ende beispielsweise zur Erzielung eines weiten Ausstrahlwinkels bei weichem Randbereich.

Die Figuren zeigen ein Optiksystem 2 für Strahlerleuchten S gemäß der vorliegenden Erfindung.

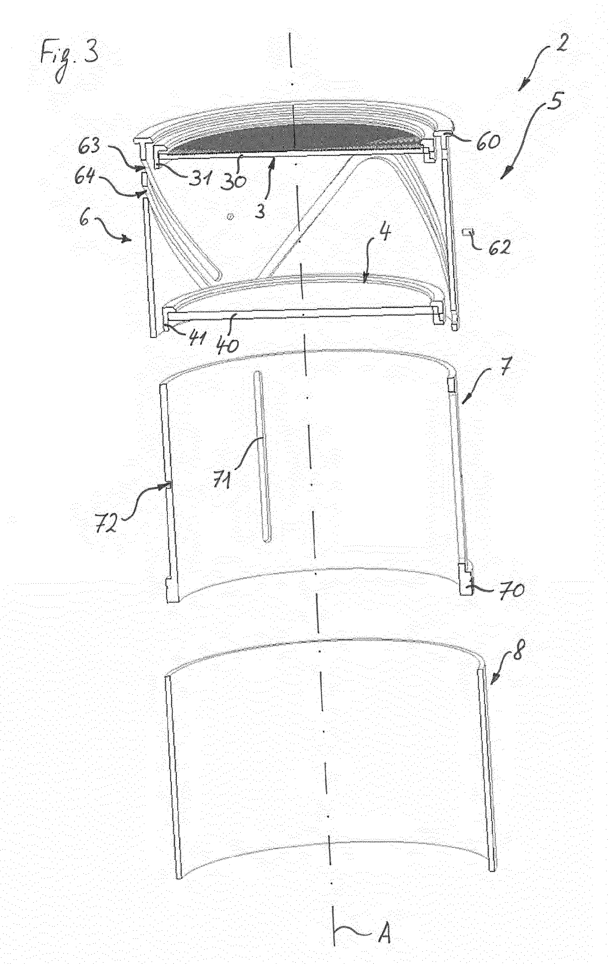

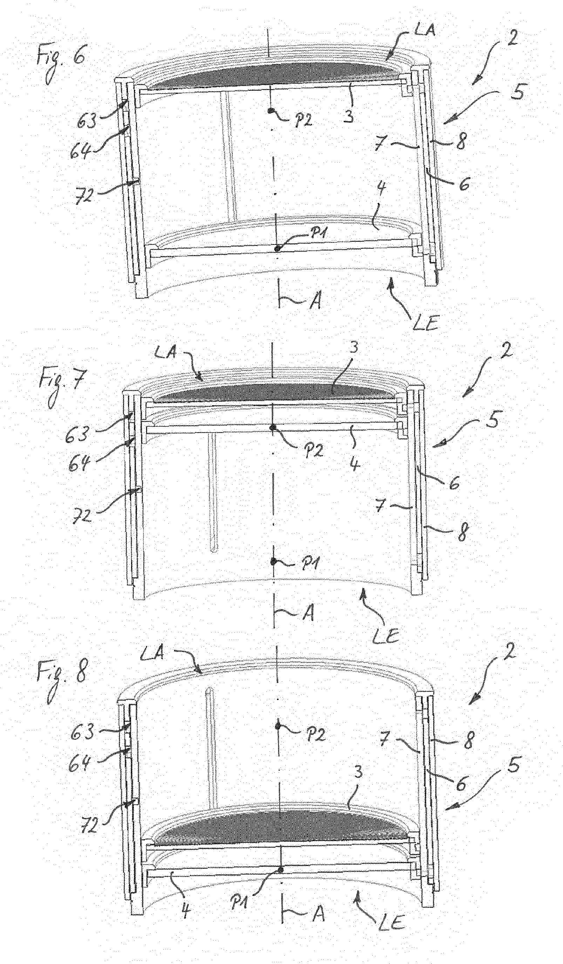

Wie insbesondere den Schnittdarstellungen der Figuren 3 und 6 bis 8 zu entnehmen ist, weist das Optiksystem 2 ein erstes Optikelement 3 und ein zweites Optikelement 4 auf. Die Optikelemente 3, 4 sind entlang einer Lichtabstrahlachse A optisch hintereinander angeordnet. Dies ist beispielsweise in den Figuren 6 bis 8 gut zu erkennen. Das Optiksystem 2 weist bevorzugt einen Lichteintrittsbereich LE zum Einkoppeln von Licht in das Optiksystem 2 und einen Lichtaustrittsbereich LA zum Auskoppeln von Licht aus dem Optiksystem 2, nachdem dieses das Optiksystem 2 und somit die Optikelemente 3, 4 optisch durchlaufen hat, auf.

Das erste Optikelement 3 kann eine optische Linse 30, wie beispielsweise eine Fresnel-Linse, aufweisen. Die Linse 30 kann bevorzugt in einem Linsenträger 31 gehalten sein, der hier als ein die Linse 30 außen umfangsseitig umgebender Ring 31 ausgebildet ist. Dabei umgibt, wie dargestellt, der Linsenträger 31 die Linse 30 hier bevorzugt quasi ringförmig. Das zweite Optikelement 4 kann eine Streuscheibe 40, wie beispielsweise eine Diffusionsscheibe, aufweisen. Auch die Streuscheibe 40 kann bevorzugt in einem Träger 41 gehalten sein; dies vergleichbar der Kombination aus Linse 30 und Linsenträger 31, wie zuvor beschrieben. Der Träger 41 kann also ebenso als ein die Streuscheibe 40 außen umfangsseitig umgebender Ring ausgebildet sein.

Das Optiksystem 2 weist des Weiteren einen Verstellmechanismus 5 auf. Der Verstellmechanismus 5 ist mit dem ersten Optikelement 3 und dem zweiten Optikelement 4 derart gekoppelt, um die Optikelemente 3, 4 derart entlang der Lichtabstrahlachse A zu bewegen, sodass die Optikelemente 3, 4 zwischen einer beabstandeten Position (vgl. beispielsweise Figur 6), in der die Optikelemente 3, 4 entlang der Lichtabstrahlachse A zueinander beabstandet sind, und einer benachbarten Position (vgl. beispielsweise Figur 7), in der die Optikelemente 3, 4 im Vergleich zu der beabstandeten Position näher zueinander angeordnet sind, relativ zueinander bewegbar sind. Der Verstellmechanismus 5 ist ferner mit dem ersten Optikelement 3 und dem zweiten Optikelement 4 derart gekoppelt, um die Optikelemente 3, 4, wenn diese sich in der benachbarten Position befinden, unter Beibehaltung der benachbarten Position entlang der Lichtabstrahlachse A zusammen bewegbar sind, wie dies beispielsweise bei Betrachtung der Figuren 7 und 8 deutlich wird. Die Optikelemente 3, 4 und der Verstellmechanismus 5 sind hier bevorzugt koaxial zueinander ausgerichtet.

Der Verstellmechanismus 5 kann derart ausgebildet sein, dass zur relativen Bewegung der Optikelemente 3, 4 zwischen der beabstandeten und der benachbarten Position nur eines der Optikelemente, hier bevorzugt das zweite Optikelement 4, bewegbar ist.

Dies ist beispielsweise aus einer Kombination der Figuren 6 und 7 ersichtlich. Hierzu kann das eine (zweite) Optikelement 4 bevorzugt zwischen einer ersten Position P1, in der es sich bezüglich des anderen (ersten) Optikelements 3 in der beabstandeten Position befindet, und einer zweiten Position P2, in der es sich bezüglich des anderen (ersten) Optikelements 3 in der benachbarten Position befindet, bewegbar sein. Somit kann unter Beibehaltung der optischen Beeinflussung des hier ersten Optikelements 3 das zweite Optikelement 4 entlang der Lichtabstrahlachse A bewegt werden, um somit die optische Funktion der zweiten Optikelements 4 umzusetzen und eine Lichtabgabecharakteristik einer mit dem Optiksystem 2 gekoppelten Leuchte S einzustellen bzw. zu verändern.

Der Verstellmechanismus 5 kann derart ausgebildet sein, dass das eine (zweite) Optikelement 4, wenn sich die Optikelemente 3, 4 in der benachbarten Position befinden, unter Beibehaltung der benachbarten Position entlang der Lichtabstrahlachse A von der zweiten P2 zu der ersten Position P1 hin und vorzugsweise zwischen der ersten und zweiten Position P1, P2 bewegbar ist. Mithin werden also, wie dies durch die Figuren 6 und 7 gezeigt ist, zunächst eines der Optikelemente 4 zu dem anderen Optikelement 5 hin bewegt. Anschließend findet eine gemeinsame Bewegung beider Optikelemente 3, 4 hier bevorzugt entgegen der vorherigen Bewegung des einen Optikelements 4 statt, wie dies beispielsweise aus einer Kombination der Figuren 7 und 8 deutlich zu erkennen ist.

Das Optiksystem 2 kann einen Befestigungsabschnitt 20 aufweisen, um das Optiksystem 2 derart mit einer Leuchte S zu verbinden, sodass das Licht der Leuchte S in Richtung der Lichtabstrahlachse A beide Optikelemente 3, 4 nacheinander, vorzugsweise zunächst das zweite Optikelement 4 und dann das erste Optikelement 3, durchläuft. Der Befestigungsabschnitt 20 kann hierzu vorzugsweise bezüglich der Lichtabstrahlachse A an eine dem einen (hier zweiten) Optikelement 4 zugewandten Seite vorgesehen sein. Der Befestigungsabschnitt 20 ist folglich in einem Lichteintrittsbereich LE des Optiksystems 2 bereitgestellt.

Wie insbesondere aus der Zusammenschau der Figuren 6 bis 8 ersichtlich ist, kann es somit ermöglicht werden, mittels des Verstellmechanismus 5 zunächst nur das zweite Optikelement 4 zu bewegen, um die Optikelemente 3, 4 zwischen der beabstandeten Position und der benachbarten Position zu bewegen; hier in diesem Fall dann von dem Befestigungsabschnitt 20 weg. Beide Optikelemente 3, 4 werden dann bevorzugt zu dem Befestigungsabschnitt 20 wieder hin bewegt, wenn sich die beiden Optikelemente 3, 4 unter Beibehaltung der benachbarten Position entlang der Lichtabstrahlachse A mittels des Verstellmechanismus 5 zusammen bewegen.

Die Optikelemente 3, 4 können jeweils Führungsstifte 32, 42 aufweisen, welche sich bevorzugt radial von dem jeweiligen Optikelement besonders bevorzugt nach außen erstrecken. Die Linsenträger 31, 41, sofern vorhanden, können bevorzugt die Führungsstifte 32, 42 des jeweiligen Optikelements 3, 4 aufweisen.

Der Verstellmechanismus 5 kann ein Führungselement 6 mit ersten und zweiten Führungsnuten 63, 64 aufweisen. Die Führungsstifte 32 des ersten Optikelements 3 können derart mit den ersten Führungsnuten 63 und die Führungsstifte 42 des zweiten Optikelements 4 derart mit den zweiten Führungsnuten 64 zusammenwirken, um die Optikelemente 3, 4 über eine Rotation relativ zu dem Führungselement 6 bezüglich der Lichtabstrahlachse A zu bewegen. Hierzu können die Führungsstifte 32, 42 bevorzugt in die entsprechenden Führungsnuten 63, 64 eingreifen.

Die Führungsnuten 63, 64 können in einem ersten Abschnitt 1A zueinander abgewinkelt verlaufen, um die Optikelemente 3, 4 mittels des Verstellmechanismus 5 zwischen der beabstandeten und der benachbarten Position zu bewegen. Hier beträgt ein Winkel α zwischen den beiden Führungsnuten 63, 64 im ersten Abschnitt 1A beispielsweise 45 Grad. Die Erfindung ist jedoch hierauf nicht beschränkt. Je nach Winkel α kann somit eine relative Bewegung der Optikelemente 3, 4 zueinander bzw. voneinander weg durch einen geringeren Drehwinkel oder einen entsprechend größeren Drehwinkel erzielt werden.

Die Führungsnuten 63, 64 können in einem zweiten Abschnitt 2A zueinander parallel verlaufen, um die Optikelemente 3, 4 mittels des Verstellmechanismus 5 unter Beibehaltung der benachbarten Position entlang der Lichtabstrahlachse A zusammen zu bewegen.

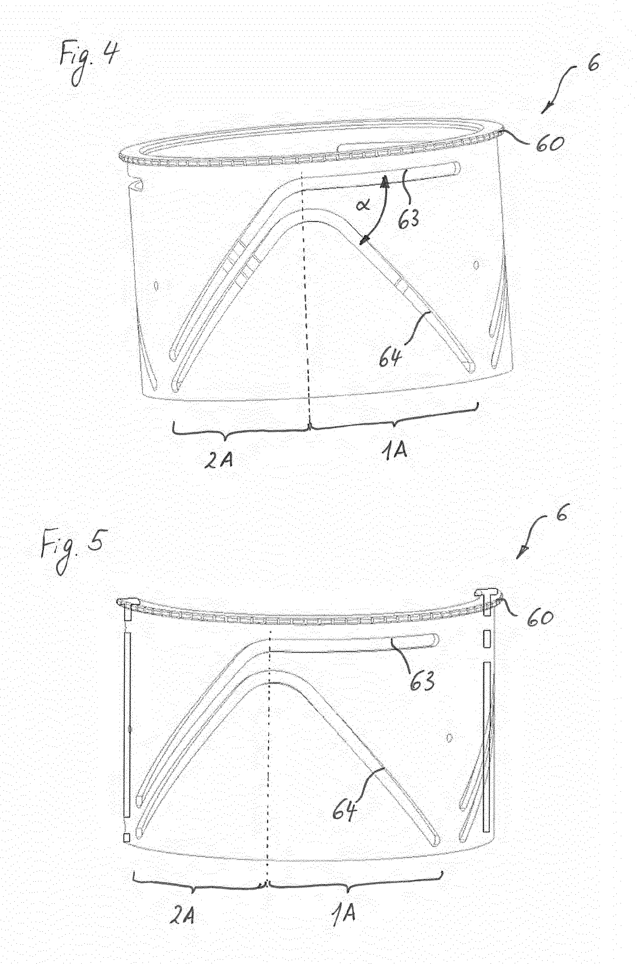

In dem ersten Abschnitt 1A können die ersten Führungsnuten 63 des ersten Optikelements 3, vorzugsweise des weiteren Optikelements, im Wesentlichen in einer orthogonal zur Lichtabstrahlachse A stehenden Ebene um die Lichtabstrahlachse A verlaufen. Die ist durch den waagerechten Abschnitt beispielsweise in den Figuren 4 und 5 deutlich zu erkennen. Aufgrund der waagerechten Ausbildung bezüglich der Lichtabstrahlachse A wird es somit ermöglicht, dass das entsprechend in dieser Führungsnut 63 geführte Optikelement bei einer Rotation relativ zu dem Führungselement 6 bezüglich der Lichtabstrahlachse A nicht bewegt wird, sondern seine Position beibehält, wie dies beispielsweise durch das erste Optikelement 3 in den Figuren 6 und 7 gezeigt ist.

Die zweiten Führungsnuten 64 des zweiten Optikelements 4, vorzugsweise des einen Optikelements, können in dem ersten Abschnitt 1A abgewinkelt zur und um die Lichtabstrahlachse A verlaufen, wie dies ebenso den Figuren 4 und 5 zu entnehmen ist. Somit kann es in diesem ersten Abschnitt ermöglicht werden, dass hier zweite Optikelement 4 durch relative Drehbewegung der Optikelement 3, 4 bezüglich des Führungselements 6 entsprechend entlang der Lichtabstrahlachse zu bewegen, wie dies ebenso den Figuren 6 und 7 zu entnehmen ist.

In dem zweiten Abschnitt 2A können die Führungsnute 63, 64 beider Optikelemente 3, 4 parallel zueinander sowie abgewinkelt zur und um die Lichtabstrahlachse A verlaufen, wie dies ebenso den Figuren 4 und 5 zu entnehmen ist. Vorzugsweise verlaufen diese dabei bezüglich einer die Lichtabstrahlachse A aufweisenden Ebene gespiegelt zur zweiten Führungsnut 64 im ersten Abschnitt 1A; mithin also wieder axial zurück. Somit ergeben sich für die erste Führungsnut 63 eine flache V-Form, bzw. eine Boomerang-Form, während die zweite Führungsnut 64 eine hier im Wesentlichen spitze V-Form aufweist. Auf diese Weise kann einfach die erforderte Führungsbewegung zunächst relativ aufeinander zu und dann gemeinsam erzielt werden.

Das Führungselement 6 kann einen Kulissenring aufweisen bzw. als solcher ausgebildet sein, welcher sich entlang der Lichtabstrahlachse A hier zylindrisch erstreckt und die Führungsnuten 63, 64 aufweist. Das Führungselement 6 ist hier bevorzugt koaxial zu den Optikelementen 3, 4 ausgerichtet.

Das Führungselement 6 kann einen exponierten Manipulationsabschnitt 60 aufweisen, mittels dem das Führungselement 6 zum Bewirken der relativen Rotation greifbar und auch bedienbar ist. Dieser ist hier als radial vorstehender Ring oder Flansch ausgebildet und kann zur besseren Griffigkeit beispielsweise eine Riffelung oder dergleichen aufweisen oder auch mit einem hemmenden Material, wie beispielsweise Gummi, beschichtet oder umgeben sein.

Des Weiteren kann der Verstellmechanismus 5 ein Halteelement 7 aufweisen, welches bezüglich der Lichtabstrahlachse A relativ drehbar zu dem Führungselement 6 vorgesehen ist. Hierzu kann eines von Halteelement 7 oder Führungselement 6 - hier das Halteelement 7 - eine sich in einer zur Lichtabstrahlachse A orthogonal erstreckenden Ebene verlaufende Nut 72 aufweisen, in welcher ein Stift 62 mit dem anderen anderen von Halteelement 7 oder Führungselement 6 - hier dem Führungselement 7 - fix gekoppelter bzw. integral ausgebildeter Stift 72 gelagert ist. Somit wird eine relative Drehung von Halteelement 7 und Führungselement 6 um die Lichtabstrahlachse A herum ermöglicht, während diese Bauteile 6, 7 axial bzgl. der Lichtabstrahlachse A nicht beweglich bzw. fix verbunden sind.

Das Halteelement 7 kann mit den Optikelementen 3, 4 und vorzugsweise deren Führungsstiften 32, 42 derart gekoppelt sein, um die Optikelemente 3, 4 bezüglich des Halteelements 7 rotatorisch zu fixieren und axial bewegbar zu lagern. Mithin sollen also die Optikelemente 3, 4 bei einer rotatorischen Bewegung des Halteelements 7 in Rotationsrichtung mitgenommen werden, sich aber dennoch in axialer Richtung frei entlang der Lichtabstrahlachse A bezüglich des Halteelements 7 bewegen können. Das Halteelement 7 kann somit als Drehmomentstütze dienen, wie im Weiteren noch beschrieben wird.

Das Halteelement 7 kann hierzu beispielsweise weitere Führungsnute 71 aufweisen, welche sich bevorzugt parallel zur Lichtabstrahlachse A erstrecken. Die vorbeschriebenen und/oder auch weitere Führungsstifte 32, 42 - beispielsweise der Optikelemente 3, 4 - können derart mit den weiteren Führungsnuten 71 zusammenwirken, vorzugsweise in diese eingreifen, dass diese entlang der Lichtabstrahlachse A frei bewegbar gelagert sind und die Optikelemente 3, 4 durch relative Rotation von dem Haltelement 7 und dem Führungselement 6 in den jeweiligen Führungsnuten 63, 64 bewegt werden bzw. verfahren können. Die weiteren Führungsnute 71 dienen dabei als Drehmomentstütze, um eben die Optikelemente 3, 4 in Rotationsrichtung mitzunehmen und somit in den Führungsnuten 63, 64 zu verfahren, sodass die Optikelement 3, 4 entsprechend der Trajektorie der Führungsnute 63, 64 bezüglich der Lichtabstrahlachse A bewegt werden können.

Das Halteelement 7 kann einen Führungsring aufweisen bzw. als solcher ausgebildet sein, welcher sich entlang der Lichtabstrahlachse A hier zylindrisch erstreckt und die weiteren Führungsnuten 71 aufweist. Das Halteelement 7 ist hier bevorzugt koaxial zu dem Führungselement 6 und weiter bevorzugt koaxial zu den Optikelementen 3, 4 ausgerichtet.

Wie auch das Führungselement 6, so kann auch das Halteelement 7 einen exponierten weiteren Manipulationsabschnitt 70 aufweisen, mittels welchem das Halteelement 7 zum Bewirken der relativen Rotation greifbar und somit auch bedienbar ist.

Der Manipulationsabschnitt 70 ist, wie den Figuren zu entnehmen, vergleichbar dem Manipulationsabschnitt 60 des Führungselements 6 ebenso hier als vorzugweise radial vorstehender Flansch bereitgestellt. Ebenso kann der weitere Manipulationsabschnitt 70 ebenso die Griffigkeit erhöhende Strukturen oder Materialien aufweisen.

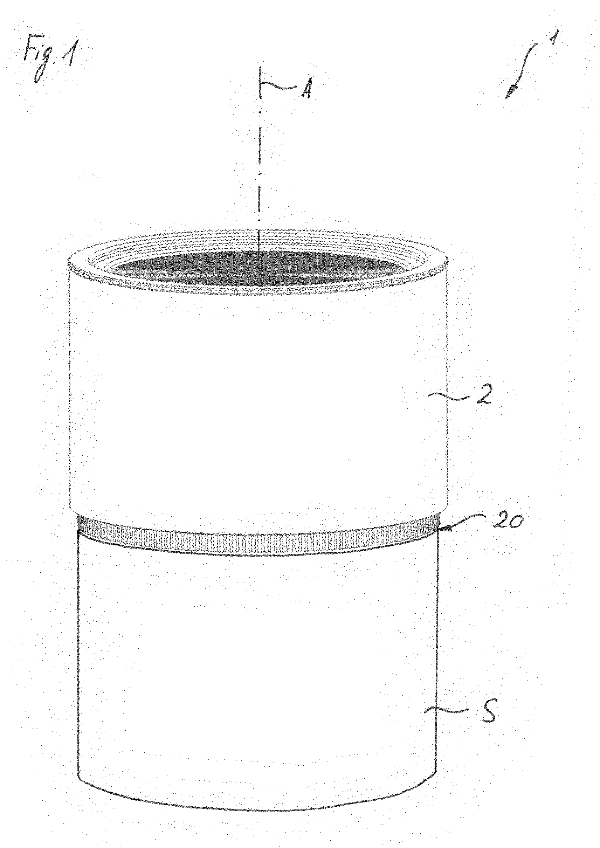

Der Verstellmechanismus 5 kann des Weiteren ein Gehäuseelement 8 aufweisen, welches den Verstellmechanismus 5 im Wesentlichen radial außen begrenzt, wie dies beispielsweise der Figur 1 gut zu entnehmen ist. In einer bevorzugten Ausgestaltungsform umgibt das Gehäuseelement 8 das Führungselement 6 und das Halteelement 7 im Wesentlichen außen umfangsseitig, und bildet somit eine Art äußere Hülle bzw. äußeres Gehäuse des Optiksystems 2. Das Gehäuseelement 8 kann dabei mit dem Führungselement 6, wie dargestellt, oder auch dem Halteelement 7 drehfest gekoppelt sein. Mithin ergibt sich aufgrund der drei hier zylinderförmig gestalteten Elemente (Führungselement 6, Halteelement 7, Gehäuseelement 8) eine insgesamt bevorzugt koaxiale ringartige Struktur, wobei diese drei Zylinder bevorzugt geschachtelt vorgesehen sind, um ein insgesamt relativ zueinander drehbares und kompaktes Optiksystem 2 zu bilden, wie dies insbesondere den Figuren 6 bis 8 zu entnehmen ist.

Das Gehäuseelement 8 kann hierzu einen Gehäusering aufweisen bzw. als solcher ausgebildet sein, welcher sich entlang der Lichtabstrahlachse A hier zylindrisch erstreckt. Das Gehäuseelement 8 ist hier bevorzugt koaxial zu dem Halteelement 7 und/oder zu dem Führungselement 6 und weiter bevorzugt koaxial zu den Optikelementen 3, 4 ausgerichtet.

Nochmals zurückkommend auf die Manipulationsabschnitte 60, 70 können diese, wie insbesondere der Figur 1 und den Figuren 6 bis 8 zu entnehmen ist, bevorzugt von dem Gehäuseelement 8 vorstehen. Hier stehen sie bevorzugt axial von dem Gehäuseelement 8 vor. In dem hier dargestellten Ausführungsbeispiel stehen die beiden Manipulationsabschnitte 60, 70 an gegenüberliegenden axialen Endes des Gehäuseelements 8 vor bzw. sind an diesen angeordnet, sodass diese in besonders einfacher Weise von einem Bediener jeweils gegriffen und funktional betätigt werden können.

Mit Blick auf die Figur 1 ist des Weiteren ein Leuchtensystem 1 dargestellt. Ein erfindungsgemäßes Leuchtensystem 1 umfasst dabei die Kombination aus dem erfindungsgemäßen Optiksystem 2 mit einer Strahlerleuchte S. Das Optiksystem 2 ist dabei derart zur Strahlerleuchte S angeordnet, dass Licht der Strahlerleuchte S in Richtung der Lichtabstrahlachse A zunächst eines der Optikelemente, bevorzugt das zweite Optikelement 4, und dann das andere Optikelement, bevorzugt das erste Optikelement 3, durchläuft. Zur Bereitstellung von Optiksystem 2 und Strahlerleuchte S zur Bildung des Leuchtensystems 1 können diese bevorzugt über den Befestigungsabschnitt 20 miteinander entsprechend verbunden sein.

Die Strahlerleuchte S kann gemäß einer besonders bevorzugten Ausgestaltungsform eine LED-Strahlerleuchte sein. Diese weist dann als Leuchtmittel LEDs bzw. LED-Module zur Lichtabgabe auf. Selbstverständlich sind auch andere Leuchtmittel denkbar. Als Strahlerleuchte S ist im Rahmen der vorliegenden Erfindung insbesondere ein Leuchtentyp zu verstehen, der Licht im Wesentlichen in einer Hauptabgaberichtung abgibt; dies ungeachtet des Abstrahlwinkels/-kegels, der eng bis weit sein kann. Als solche Leuchten kommen beispielsweise sogenannte Spot-Leuchten in Frage.

Im Weiteren sollen nun ein erfindungsgemäßes Verfahren zur Einstellung einer Lichtabgabecharakteristik einer Strahlerleuchte S eines Leuchtensystem 1 gemäß der vorliegenden Erfindung beschrieben werden.

Ganz allgemein wird zunächst ein Leuchtensystem 1 gemäß der vorliegenden Erfindung bereitgestellt. In einem weiteren Schritt wird sodann der Verstellmechanismus 5 betätigt. Dies bevorzugt durch relative Drehung von Führungselement 6 einerseits und Halteelement 7 andererseits. Aufgrund der Betätigung des Verstellmechanismus 5 werden die Optikelement 3, 4 zwischen der beabstandeten Position und der benachbarten Position und, wenn sich die Optikelement 3, 4 in der benachbarten Position befinden, diese wahlweise unter Beibehaltung der benachbarten Position entlang der Lichtabstrahlachse A zusammen bewegt.

Bevorzugt kann ausschließlich das zweite Optikelement bewegt werden, um die Optikelemente zwischen der beabstandeten Position und der der benachbarten Position zu bewegen. Dies bevorzugt relativ zur Strahlerleuchte S wahlweise von dieser weg oder zu dieser hin, wie dies beispielsweise aus der Verbindung der Figuren 6 und 7 zu entnehmen ist.

Wenn sich die beiden Optikelemente 3, 4 unter Beibehaltung der benachbarten Positionen entlang der Lichtabstrahlachse A zusammen bewegen, können beide Optikelemente 3, 4 relativ zur Strahlerleuchte S wahlweise von dieser weg oder zu dieser hin bewegt werden. Dies kann beispielsweise aus der Verbindung der Figuren 7 und 8 entnommen werden.

Nach der Beschreibung der mechanischen Verstellfunktion soll im Folgenden eine sich daraus beispielhaft ergebenden optischen Funktionen auf Basis einer beispielhaften Optikelemente-Kombination beschrieben werden. Hierzu soll beispielhaft angenommen werden, dass das erste Optikelement 3 eine optische Linse 40, wie eine Fresnell-Linse, aufweist. Das zweite Optikelement 4 ist hier beispielhaft als Streuscheibe 40 und bevorzugt als Diffusionsscheibe ausgebildet. Mit Verweis auf die Figur 6, in der die beiden Optikelemente 3, 4 in der beabstandeten Position vorgesehen sind, ergibt sich nunmehr bei der Kombination des Optiksystems 2 mit einer Strahlerleuchte S zur Bildung eines Leuchtensystems 1 eine Spot-artige Lichtabgabe mit engem Ausstrahlwinkel und gleichzeitig hartem Randbereich. Wird nun durch Drehbewegung des Führungselements 6 relativ zu dem Halteelement 7 das zweite Optikelement 4 hier zu dem ersten Optikelement 3 hin bewegt und somit von der Strahlerleuchte S weg, so ergibt es sich, dass der harte Randbereich des Lichtkegels aufgeweicht wird; mithin also ein sogenannter "Beamshaping" Effekt erzielt wird. Das Ganze unter Beibehaltung des hier engen Ausstrahlwinkels, da das erste Optikelement 3 hier relativ zur Lichtabstrahlachse A sowie zur Strahlerleuchte S nicht bewegt wird.

Durch diese Bewegung kann die Lichtabgabecharakteristik von der schärfsten Abbildung des Lichtkegels mit hartem Randbereich unter Beibehaltung des Ausstrahlwinkels zu einer immer weicheren Abbildung insbesondere im Randbereich geändert werden. Mithin kann also bspw. der Rand des Lichtkegels einer Strahlerleuchte S im engsten Ausstrahlwinkel (Spot) nur in seinem Randbereich durch Einstellbewegung am Optiksystem 2 veränderbar sein. Der Übergang von hell zu dunkel kann dabei bspw. von abrupt hin zu weich fließend geändert werden können, ohne dabei den eigentlichen Austrahlwinkel der Leuchte S zu ändern. Dies soll bevorzugt mit einer einfachen (Dreh-)Bewegung am Optiksystem 2 geschehen.

Bei weiterer Drehung des Führungselements 6 bezüglich des Halteelements 7 werden sodann die beiden Optikelemente 3, 4 unter Beibehaltung der benachbarten Position nunmehr entlang der Lichtabstrahlachse A zurück - also auf die Strahlerleuchte S zu - bewegt, also auf die maximale innere, Leuchten-nächste Position. Dadurch ändert sich der Ausstrahlwinkel von hier beispielsweise engstrahlend (Spot) bis zu hier beispielsweise maximal breitstrahlend (Flood), je nach Ausgestaltung des optischen Systems. Beide Einstellungsvarianten sollen dabei bevorzugt alle mit derselben Einstellbewegung erfolgen können. Somit können mit der vorliegenden Erfindung bevorzugt zwei Einstelleigenschaften eines Strahlers mit nur einer Einstellbewegung gesteuert werden; hier bspw. Austrahlwinkel (Zoom) und Steuerung des Randbereichs des Lichtkegels (Beamshaping). Andererseits soll mit derselben Einstellbewegung auch nur eine dieser Einstelleigenschaften alleine und unabhängig von der anderen gesteuert werden können; hier bspw. die Steuerung des Randbereichs des Lichtkegels (Beamshaping). Dies ganze bei einfacher Bedienung, einfachem Aufbau und minimalem Einfluss auf das Leuchtendesign.

Die vorliegende Erfindung ist durch das vorbeschriebene Ausführungsbeispiel nicht beschränkt, sofern sie vom Gegenstand der folgenden Ansprüche umfasst ist. Insbesondere sind sämtliche Merkmale des Ausführungsbeispiels in beliebiger Weise miteinander kombinierbar. Beispielsweise können beliebige Optikelemente 3, 4 verwendet werden; je nach gewünschter Lichtabgabecharakteristik.

## Patentansprüche

1. Optiksystem (2) für Strahlerleuchte (S), aufweisend:
ein erstes Optikelement (3) und ein zweites Optikelement (4), welche entlang einer Lichtabstrahlachse (A) optisch hintereinander angeordnet sind, und
einen Verstellmechanismus (5), welcher mit dem ersten Optikelement (3) und dem zweiten Optikelement (4) derart gekoppelt ist, um die Optikelemente (3, 4) derart entlang der Lichtabstrahlachse (A) zu bewegen, so dass die Optikelemente (3,4) zwischen einer beabstandeten Position, in der die Optikelemente (3,4) entlang der Lichtabstrahlachse (A) zueinander beabstandet sind, und einer benachbarten Position, in der die Optikelemente (3, 4) im Vergleich zu der beabstandeten Position näher zueinander angeordnet sind, relativ zueinander bewegbar sind, und
wobei der Verstellmechanismus (5) ferner mit dem ersten Optikelement (3) und dem zweiten Optikelement (4) derart gekoppelt ist, um die Optikelemente (3, 4), wenn diese sich in der benachbarten Position befinden, unter Beibehaltung der benachbarten Position entlang der Lichtabstrahlachse (A) zusammen bewegbar sind,
**dadurch gekennzeichnet, dass**
die Optikelemente (3,4) jeweils Führungsstifte (32, 42) aufweisen, welche sich von dem jeweiligen Optikelement (3,4) erstrecken, und
der Verstellmechanismus (5) ein Führungselement (6) mit ersten und zweiten Führungsnuten (63, 64) aufweist, wobei die Führungsstifte (32) des ersten Optikelements (3) derart mit den ersten Führungsnuten (63) und die Führungsstifte (42) des zweiten Optikelements (4) derart mit den zweiten Führungsnuten (64) zusammenwirken, um die Optikelemente (3, 4) über eine Rotation relativ zu dem Führungselement (6) bzgl. der Lichtabstrahlachse (A) zu bewegen.

2. Optiksystem (2) gemäß Anspruch 1, wobei der Verstellmechanismus (5) derart ausgebildet ist, dass zur relativen Bewegung der Optikelemente (3, 4) zwischen der beabstandeten und der benachbarten Position nur eines der Optikelemente (4, 3), vorzugsweise das zweite Optikelement (4), bewegbar ist, wobei hierzu das eine Optikelement (4, 3) bevorzugt zwischen einer ersten Position (P1), in der es sich bezüglich des anderen Optikelements (3, 4) in der beabstandeten Position befindet, und einer zweiten Position (P2), in der es sich bezüglich des anderen Optikelements (3,4) in der benachbarten Position befindet, bewegbar ist,
wobei der Verstellmechanismus (5) bevorzugt derart ausgebildet ist, dass das eine Optikelement (3, 4), wenn sich die Optikelemente (3, 4) in der benachbarten Position befinden, unter Beibehaltung der benachbarten Position entlang der Lichtabstrahlachse (A) von der zweiten Position (P2) zu der ersten Position (P1) hin und vorzugsweise zwischen der ersten und zweiten Position (P1, P2) bewegbar ist.

3. Optiksystem (2) gemäß einem der vorhergehenden Ansprüche, wobei das Optiksystem (2) einen Befestigungsabschnitt (20) aufweist, vorzugsweise bzgl. der Lichtabstrahlachse (A) an einer dem einen Optikelement (4) zugewandten Seite, um das Optiksystem (2) derart mit einer Leuchte (S) zu verbinden, so dass das Licht der Leuchte (S) in Richtung der Lichtabstrahlachse (A) beide Optikelemente (3,4) nacheinander, vorzugsweise zunächst das zweite Optikelement (4) und dann das erste Optikelement (3), durchläuft.

4. Optiksystem (2) gemäß einem der vorhergehenden Ansprüche, wobei sich die Führungsstifte (32, 42) radial von dem jeweiligen Optikelement (3, 4) erstrecken, bevorzugt radial nach außen erstrecken, und/oder
wobei die Führungsstifte (32) des ersten Optikelements (3) in die ersten Führungsnuten (63) und die Führungsstifte (42) des zweiten Optikelements (4) in die zweiten Führungsnuten (64) eingreifen, um die Optikelemente (3, 4) über eine Rotation relativ zu dem Führungselement (6) bzgl. der Lichtabstrahlachse (A) zu bewegen.

5. Optiksystem (2) gemäß einem der vorhergehenden Ansprüche, wobei die Führungsnuten (63, 64) in einem ersten Abschnitt (1A) zueinander abgewinkelt verlaufen, um die Optikelemente (3,4) mittels des Verstellmechanismus (5) zwischen der beabstandeten und der benachbarten Position zu bewegen, und
wobei die Führungsnuten (63, 64) in einem zweiten Abschnitt (2A) zueinander parallel verlaufen, um die Optikelemente (3, 4) mittels des Verstellmechanismus (5) unter Beibehaltung der benachbarten Position entlang der Lichtabstrahlachse (A) zusammen zu bewegen,
wobei vorzugsweise:
• in dem ersten Abschnitt (1A) die ersten Führungsnuten (63) des ersten Optikelements (3), vorzugsweise des weiteren Optikelements, im Wesentlichen in einer orthogonal zur Lichtabstrahlachse (A) stehenden Ebene um die Lichtabstrahlachse (A) verlaufen, und die zweiten Führungsnuten (64) des zweiten Optikelements (4), vorzugsweise des einen Optikelements, abgewinkelt zur und um die Lichtabstrahlachse (A) verlaufen, und/oder
• in dem zweiten Abschnitt (2A) die Führungsnute (63, 64) beider Optikelemente (3, 4) parallel zueinander sowie abgewinkelt zur und um die Lichtabstrahlachse (A) verlaufen, vorzugsweise bzgl. einer die Lichtabstrahlachse (A) aufweisenden Ebene gespiegelt zur zweiten Führungsnut (64) im ersten Abschnitt (1A).

6. Optiksystem (2) gemäß einem der vorhergehenden Ansprüche,
wobei das Führungselement (6) einen Kulissenring aufweist, welcher sich entlang der Lichtabstrahlachse (A) erstreckt und die Führungsnuten (63, 64) aufweist, und/oder
wobei das Führungselement (6) einen exponierten Manipulationsabschnitt (60) aufweist, mittels welchem das Führungselement (6) zum Bewirken der relativen Rotation greifbar ist.

7. Optiksystem (2) gemäß einem der vorhergehenden Ansprüche, wobei der Verstellmechanismus (5) ein Halteelement (7) aufweist, welches bzgl. der Lichtabstrahlachse (A) relativ drehbar zu dem Führungselement (6) vorgesehen ist,
wobei das Halteelement (7) mit den Optikelementen (3,4) und vorzugsweise deren Führungsstiften (32, 42) derart gekoppelt ist, um die Optikelemente (3, 4) bzgl. des Halteelements (7) rotatorisch zu fixieren und axial bewegbar zu lagern.

8. Optiksystem (2) gemäß Anspruch 7, wobei das Halteelement (7) weitere Führungsnute (71) aufweist, welche sich bevorzugt parallel zur Lichtabstrahlachse (A) erstrecken, und wobei die und/oder weitere Führungsstifte (32, 42) der Optikelemente (3, 4) derart mit den weiteren Führungsnuten (71) zusammenwirken, vorzugsweise in diese eingreifen, dass diese entlang der Lichtabstrahlachse (A) frei bewegbar gelagert sind und die Optikelemente (3,4) durch relative Rotation von dem Halteelement (7) und dem Führungselement (6) in den jeweiligen Führungsnuten (63, 64) bewegen.

9. Optiksystem (2) gemäß Anspruch 7 oder 8,
wobei das Halteelement (7) einen Führungsring aufweist, welcher sich entlang der Lichtabstrahlachse (A) erstreckt und die weiteren Führungsnuten (71) aufweist, und/oder
wobei das Halteelement (7) einen exponierten weiteren Manipulationsabschnitt (70) aufweist, mittels welchem das Halteelement (7) zum Bewirken der relativen Rotation greifbar ist.

10. Optiksystem (2) gemäß einem der vorhergehenden Ansprüche, wobei der Verstellmechanismus (5) ein Gehäuseelement (8) aufweist, welcher den Verstellmechanismus (5) im Wesentlichen radial außen begrenzt, vorzugsweise das Führungselement (6) und das Halteelement (7) im Wesentlichen außen umfangsseitig umgibt.

11. Optiksystem (2) gemäß Anspruch 10,
wobei das Gehäuseelement (8) einen Gehäusering aufweist, welcher sich entlang der Lichtabstrahlachse (A) erstreckt, und/oder
wobei das Gehäuseelement (8) vorzugsweise mit dem Führungselement (6) oder dem Halteelement (7) drehfest gekoppelt ist, und/oder
wobei der exponierte Manipulationsabschnitt (60) und/oder der exponierte weitere Manipulationsabschnitt (70) von dem Gehäuseelement (8) vorsteht, vorzugsweise axial vorsteht, und wobei vorzugsweise der exponierte Manipulationsabschnitt (60) und der weitere exponierte Manipulationsabschnitt (70) an gegenüberliegenden axialen Enden des Gehäuseelements (8) angeordnet sind.

12. Optiksystem (2) gemäß einem der vorhergehenden Ansprüche,
wobei das erste Optikelement (3) eine optische Linse (30), vorzugsweise eine Fresnel-Linse, aufweist, wobei die Linse (30) bevorzugt in einem Linsenträger (31) gehalten ist, und wobei der Linsenträger (31) ferner bevorzugt die Führungsstifte (32) des ersten Optikelements (3) aufweist, und/oder
wobei das zweite Optikelement (4) eine Streuscheibe (40), vorzugsweise eine Diffusionsscheibe, aufweist, wobei die Streuscheibe (40) bevorzugt in einem Träger (41) gehalten ist, und wobei der Träger (41) ferner bevorzugt die Führungsstifte (42) des zweiten Optikelements (4) aufweist.

13. Leuchtensystem (1) aufweisend eine Strahlerleuchte (S), vorzugsweise eine LED-Strahlerleuchte, und ein Optiksystem (2) gemäß einem der vorhergehenden Ansprüche, wobei das Optiksystem (2) derart zur Strahlerleuchte (S) angeordnet ist, vorzugsweise diese über den Befestigungsabschnitt (20) miteinander derart verbunden sind, dass Licht der Strahlerleuchte (S) in Richtung der Lichtabstrahlachse (A) zunächst das zweite Optikelement (4) und dann das erste Optikelement (3) durchläuft.

14. Verfahren zur Einstellung einer Lichtabgabecharakteristik einer Strahlerleuchte (S) eines Leuchtensystems (1), aufweisend die Schritte:
• Bereitstellen eines Leuchtensystems (1) gemäß Anspruch 13,
• Betätigen des Verstellmechanismus (5), bevorzugt durch relative Drehung von Führungselement (6) und Halteelement (7), so dass die Optikelemente (3,4) zwischen der beabstandeten Position und der benachbarten Position und, wenn sich die Optikelemente (3, 4) in der benachbarten Position befinden, diese wahlweise unter Beibehaltung der benachbarten Position entlang der Lichtabstrahlachse (A) zusammen bewegt werden.

15. Verfahren gemäß Anspruch 14,
wobei ausschließlich das zweite Optikelement (4) bewegt wird, um die Optikelemente (3,4) zwischen der beabstandeten Position und der benachbarten Position zu bewegen, vorzugsweise relativ zur Strahlerleuchte (S) wahlweise von dieser weg oder zu dieser hin, und/oder
wobei, wenn sich die beiden Optikelemente (3, 4) unter Beibehaltung der benachbarten Position entlang der Lichtabstrahlachse (A) zusammen bewegen, beide Optikelemente (3,4) relativ zur Strahlerleuchte (S) wahlweise von dieser weg oder zu dieser hin bewegt werden.

## Claims

1. Optical system (2) for a spotlight (S), comprising:
a first optical element (3) and a second optical element (4) which are arranged optically one behind the other along a light-radiating axis (A), and an adjustment mechanism (5), which is coupled to the first optical element (3) and the second optical element (4) such that it can move the optical elements (3, 4) along the light-radiating axis (A) in such a way that the optical elements (3, 4) can be moved relative to one another between a distanced position, in which the optical elements (3, 4) are spaced apart along the light-radiating axis (A), and an adjacent position, in which the optical elements (3, 4) are disposed closer to one another than in the distanced position, and
wherein the adjustment mechanism (5) is further coupled to the first optical element (3) and the second optical element (4) such that the optical elements (3, 4), when they are in the adjacent position, can be moved together along the light-radiating axis (A) while maintaining said adjacent position,
**characterized in that**
each optical element (3, 4) comprises guide pins (32, 42), which extend from the respective optical element (3, 4), and
the adjustment mechanism (5) comprises a guide element (6) having first and second guide grooves (63, 64), wherein the guide pins (32) of the first optical element (3) interact with the first guide grooves (63) and the guide pins (42) of the second optical element (4) interact with the second guide grooves (64) such that the optical elements (3, 4) can be moved with respect to the light-radiating axis (A) via a rotation relative to the guide element (6).

2. Optical system (2) according to Claim 1, wherein the adjustment mechanism (5) is configured such that, for the relative movement of the optical elements (3, 4) between the distanced and the adjacent position, only one of the optical elements (4, 3), preferably the second optical element (4), can be moved, wherein for this purpose said one optical element (4, 3) can preferably be moved between a first position (P1), in which it is in the distanced position relative to the other optical element (3, 4), and a second position (P2), in which it is in the adjacent position relative to the other optical element (3, 4), wherein the adjustment mechanism (5) is preferably configured such that, when the optical elements (3, 4) are in the adjacent position, the one optical element (3, 4) can be moved along the light-radiating axis (A) from the second position (P2) toward the first position (P1), and preferably between the first and the second position (P1, P2), while maintaining the adjacent position.

3. Optical system (2) according to any one of the preceding claims, wherein the optical system (2) comprises a mounting section (20), with respect to the light-radiating axis (A) preferably on a side facing the one optical element (4), to connect the optical system (2) to a lamp (S) in such a way that the light of the lamp (S) passes through both optical elements (3, 4) one after the other in the direction of the light-radiating axis (A), preferably first the second optical element (4) and then the first optical element (3).

4. Optical system (2) according to any one of the preceding claims, wherein the guide pins (32, 42) extend radially from the respective optical element (3, 4), preferably radially outward, and/or
wherein the guide pins (32) of the first optical element (3) engage in the first guide grooves (63) and the guide pins (42) of the second optical element (4) engage in the second guide grooves (64) in order to move the optical elements (3, 4) with respect to the light-radiating axis (A) via a rotation relative to the guide element (6).

5. Optical system (2) according to any one of the preceding Claims, wherein the guide grooves (63, 64) in a first section (1A) are angled toward one another to move the optical elements (3, 4) between the distanced and the adjacent position by means of the adjustment mechanism (5), and
wherein the guide grooves (63, 64) in a second section (2A) are parallel to one another to move the optical elements (3, 4) together along the light-radiating axis (A) by means of the adjustment mechanism (5) while maintaining the adjacent position, wherein, preferably:
• in the first section (1A), the first guide grooves (63) of the first optical element (3), preferably of the further optical element, extend around the light-radiating axis (A) substantially in a plane orthogonal to the light-radiating axis (A), and the second guide grooves (64) of the second optical element (4), preferably of the one optical element, extend around the light-radiating axis (A) at an angle to said axis, and/or
• in the second section (2A), the guide grooves (63, 64) of both optical elements (3, 4) are parallel to one another and also extend around the light-radiating axis (A) at an angle to said axis, preferably mirroring the second guide groove (64) in the first section (1A) with respect to a plane which includes the light-radiating axis (A).

6. Optical system (2) according to any one of the preceding claims, wherein the guide element (6) comprises a cam ring, which extends along the light-radiating axis (A) and comprises the guide grooves (63, 64), and/or
wherein the guide element (6) comprises an exposed manipulation section (60), by means of which the guide element (6) can be gripped to effect the relative rotation.

7. Optical system (2) according to any one of the preceding Claims, wherein the adjustment mechanism (5) comprises a holding element (7), which is provided in a rotatable manner relative to the guide element (6) with respect to the light-radiating axis (A), wherein the holding element (7) is coupled to the optical elements (3, 4) and preferably their guide pins (32, 42) such that the optical elements (3, 4) are rotationally fixed with respect to the holding element (7) and mounted in an axially movable manner.

8. Optical system (2) according to Claim 7, wherein the holding element (7) comprises further guide grooves (71) which preferably extend parallel to the light-radiating axis (A), and wherein the and/or further guide pins (32, 42) of the optical elements (3, 4) interact, preferably engage, with the further guide grooves (71) such that they are mounted in a freely movable manner along the light-radiating axis (A) and the optical elements (3, 4) move by relative rotation of the holding element (7) and the guide element (6) in the respective guide grooves (63, 64).

9. Optical system (2) according to Claim 7 or 8,
wherein the holding element (7) comprises a guide ring, which extends along the light-radiating axis (A) and comprises the further guide grooves (71), and/or
wherein the holding element (7) comprises an exposed further manipulation section (70), by means of which the holding element (7) can be gripped to effect the relative rotation.

10. Optical system (2) according to any one of the preceding claims, wherein the adjustment mechanism (5) comprises a housing element (8), which substantially radially delimits the adjustment mechanism (5) to the outside and preferably substantially circumferentially surrounds the outside of the guide element (6) and the holding element (7).

11. Optical system (2) according to Claim 10,
wherein the housing element (8) comprises a housing ring which extends along the light-radiating axis (A), and/or
wherein the housing element (8) is preferably coupled to the guide element (6) or the holding element (7) in a rotationally fixed manner, and/or
wherein the exposed manipulation section (60) and/or the exposed further manipulation section (70) protrudes from the housing element (8), preferably axially, and wherein the exposed manipulation section (60) and the further exposed manipulation section (70) are preferably arranged on opposite axial ends of the housing element (8).

12. Optical system (2) according to any one of the preceding claims, wherein the first optical element (3) comprises an optical lens (30), preferably a Fresnel lens, wherein the lens (30) is preferably held in a lens carrier (31), and wherein the lens carrier (31) further preferably comprises the guide pins (32) of the first optical element (3), and/or wherein the second optical element (4) comprises a stray disc (40), preferably a diffusion disc, wherein the stray disc (40) is preferably held in a carrier (41), and wherein the carrier (41) further preferably comprises the guide pins (42) of the second optical element (4).

13. Lighting system (1) comprising a spotlight (S), preferably an LED spotlight, and an optical system (2) according to any one of the preceding claims, wherein the optical system (2) is arranged relative to the spotlight (S), preferably connected to one another via the mounting section (20), such that light from the spotlight (S) passes first through the second optical element (4) and then through the first optical element (3) in the direction of the light-radiating axis (A).

14. Method for adjusting a light emission characteristic of a spotlight (S) of a lighting system (1), comprising the steps:
• providing a lighting system (1) according to Claim 13,
• actuating the adjustment mechanism (5), preferably via a relative rotation of the guide element (6) and the holding element (7), so that the optical elements (3, 4) are moved between the distanced position and the adjacent position and, when the optical elements (3, 4) are in the adjacent position, can be moved together along the light-radiating axis (A) while maintaining the adjacent position.

15. Method according to Claim 14,
wherein only the second optical element (4) is moved to move the optical elements (3, 4) between the distanced position and the adjacent position, preferably relative to the spotlight (S), either away from or toward said spotlight, and/or wherein, when the two optical elements (3, 4) move together along the light-radiating axis (A) while maintaining the adjacent position, both optical elements (3, 4) are moved relative to the spotlight (S), either away from or toward said spotlight.

## Revendications

1. Système optique (2) pour projecteur (S), présentant :
un premier élément optique (3) et un second élément optique (4), disposés optiquement l'un derrière l'autre, le long d'un axe de rayonnement lumineux (A), et un mécanisme de réglage (5), accouplé au premier élément optique (3) et au second élément optique (4) de manière à déplacer les éléments optiques (3, 4) le long de l'axe de rayonnement lumineux (A), de sorte que les éléments optiques (3, 4) soient mobiles l'un par rapport à l'autre entre une position écartée, dans laquelle les éléments optiques (3, 4) sont écartés l'un de l'autre le long de l'axe de rayonnement lumineux (A) et une position voisine, dans laquelle les éléments optiques (3, 4) sont disposés de manière plus rapprochée l'un de l'autre par rapport à la position écartée et
dans lequel le mécanisme de réglage (5) est en outre accouplé au premier élément optique (3) et au second élément optique (4) de manière à ce que les éléments optiques (3, 4), lorsque ceux-ci se trouvent dans la position voisine, soient mobiles ensemble tout en conservant la position voisine le long de l'axe de rayonnement lumineux (A),
**caractérisé en ce que**
les éléments optiques (3, 4) présentent respectivement des broches de guidage (32, 42), s'étendant depuis l'élément optique respectif (3, 4) et
le mécanisme de réglage (5), présente un élément de guidage (6) comprenant les premières et secondes fentes de guidage (63, 64), les broches de guidage (32) du premier élément d'optique (3) coopérant avec les premières fentes de guidage (63) et les broches de guidage (42) du second élément d'optique (4) coopérant avec les secondes fentes de guidage (64) de manière à déplacer les éléments optiques (3, 4) par rotation par rapport à l'élément de guidage (6), respectivement par rapport à l'axe de rayonnement lumineux (A).

2. Système optique (2) selon la revendication 1, dans lequel le mécanisme de réglage (5) est conçu de telle manière que, pour le mouvement relatif des éléments optiques (3, 4) entre la position écartée et la position voisine, seul l'un des éléments optiques (4, 3), de préférence le second élément optique (4), est mobile, dans lequel, dans ce but, ledit élément optique (4, 3) est mobile de préférence entre une première position (P1), dans laquelle il se trouve dans la position écartée par rapport à l'autre élément optique (3, 4) et une seconde position (P2), dans laquelle il se trouve dans la position voisine par rapport à l'autre élément optique (3, 4),
dans lequel le mécanisme de réglage (5) est de préférence conçu de telle manière que ledit élément optique (3, 4), lorsque les éléments optiques (3, 4) se trouvent dans la position voisine, est mobile tout en conservant la position voisine le long de l'axe de rayonnement lumineux (A) de la seconde position (P2) à la première position (P1) et de préférence entre les première et seconde position (P1, P2).

3. Système optique (2) selon l'une des quelconques revendications précédentes, dans lequel le système optique (2) présente une section de fixation (20), de préférence par rapport à l'axe de rayonnement lumineux (A) sur un côté orienté vers ledit élément optique (4), pour raccorder le système optique (2) à un luminaire (S), de sorte que la lumière du luminaire (S) traverse, en direction de l'axe de rayonnement lumineux (A), les deux éléments optiques (3, 4), l'un après l'autre, de préférence d'abord le second élément optique (4) puis le premier élément optique (3).

4. Système optique (2) selon l'une des quelconques revendications précédentes, dans lequel les broches de guidage (32, 42) s'étendent radialement depuis l'élément optique respectif (3, 4), de préférence radialement vers l'extérieur et/ou dans lequel les broches , de guidage (32) du premier élément optique (3) viennent en prise dans les premières fentes de guidage (63) et les broches de guidage (42) du second élément optique (4) dans les secondes fentes de guidage (64), afin de déplacer les éléments d'optique (3, 4) par un rotation par rapport à l'élément de guidage (6), respectivement par rapport à l'axe de rayonnement lumineux (A).

5. Système optique (2) selon l'une des quelconques revendications précédentes, dans lequel les fentes de guidage (63, 64) s'étendent de façon pliée l'une par rapport à l'autre dans une première section (1A) afin de déplacer les éléments optiques (3, 4) au moyen du mécanisme de réglage (5) entre la position écartée et la position voisine et
dans lequel les fentes de guidage (63, 64) s'étendent parallèles l'une à l'autre dans une seconde section (2A) afin de déplacer les éléments optiques (3, 4) au moyen du mécanisme de réglage (5) ensemble, tout en conservant la position voisine le long de l'axe de rayonnement (A), dans lequel de préférence :
• dans la première section (1A), les premières fentes de guidage (63) du premier élément optique (3), de préférence de l'autre élément optique, s'étendent essentiellement dans un plan étant orthogonal à l'axe de rayonnement lumineux (A) autour de l'axe de rayonnement lumineux (A) et les secondes fentes de guidage (64) du second élément optique (4), de préférence ledit élément optique, s'étendent de façon pliée par rapport à, et autour de, l'axe de rayonnement lumineux (A) et/ou
• dans la seconde section (2A), les fentes de guidage (63, 64) des deux éléments optiques (3, 4) s'étendent parallèles les unes aux autres et de façon pliée par rapport à, et autour de, l'axe de rayonnement lumineux (A), de préférence par rapport à un plan contenant l'axe de rayonnement lumineux (A) avec une symétrie de miroir par rapport aux secondes fentes de guidage (64) dans la première section (1A).

6. Système optique (2) selon l'une des quelconques revendications précédentes,
dans lequel l'élément de guidage (6) présente un anneau de coulisse s'étendant le long de l'axe de rayonnement lumineux (A) et présentant les fentes de guidage (63, 64) et/ou dans lequel l'élément de guidage (6) présente une section de manipulation (60) exposée, permettant de saisir l'élément de guidage (6) pour entraîner la rotation relative.

7. Système optique (2) selon l'une des quelconques revendications précédentes, dans lequel le mécanisme de réglage (5) présente un élément de retenue (7) disposé par rapport à l'axe de rayonnement lumineux (A) relativement pivotant par rapport à l'élément de guidage (6),
dans lequel l'élément de retenue (7) est accouplé aux éléments optiques (3, 4) et de préférence à leurs broches de guidage (32, 42) de manière à fixer les éléments optiques (3, 4), respectivement de manière rotative par rapport à l'élément de retenue (7) et à les placer de façon axiale et mobile.

8. Système optique (2) selon la revendication 7, dans lequel l'élément de retenue (7) présente d'autres fentes de guidage (71), qui s'étendent de préférence parallèlement à l'axe de rayonnement lumineux (A) et dans lequel les et/ou d'autres broches de guidage (32, 42) des éléments optiques (3, 4) coopèrent avec les autres fentes de guidage (71), de préférence viennent en prise dans celles-ci, de sorte qu'elles soient placées librement mobiles le long de l'axe de rayonnement lumineux (A) et les éléments optiques (3, 4) se déplacent par rotation relative depuis l'élément de retenue (7) et l'élément de guidage (6) dans les fentes de guidage respectives (63, 64).

9. Système optique (2) selon la revendication 7 ou 8,
dans lequel l'élément de retenue (7) présente un anneau de guidage s'étendant le long de l'axe de rayonnement lumineux (A) et comprenant les autres fentes de guidage (71) et/ou dans lequel l'élément de retenue (7) présente une autre section de manipulation (70) exposée, permettant la saisie de l'élément de retenue (7) pour entraîner la rotation relative.

10. Système optique (2) selon l'une des quelconques revendications précédentes, dans lequel le mécanisme de réglage (5) présente un élément de boîtier (8) limitant le mécanisme de réglage (5) essentiellement radialement à l'extérieur, de préférence entoure essentiellement à l'extérieur côté périphérie l'élément de guidage (6) et l'élément de retenue (7).

11. Système optique (2) selon la revendication 10,
dans lequel l'élément de boîtier (8) présente un anneau de boîtier s'étendant le long de l'axe de rayonnement lumineux (A) et/ou
dans lequel l'élément de boîtier (8) est de préférence accouplé fixe en rotation à l'élément de guidage (6) ou à l'élément de retenue (7) et/ou
dans lequel la section de manipulation (60) exposée et/ou l'autre section de manipulation (70) exposée font saillie depuis l'élément de boîtier (8), de préférence de façon axiale, et dans lequel de préférence la section de manipulation (60) exposée et l'autre section de manipulation (70) exposée sont disposées au niveau d'extrémités axiales opposées de l'élément de boîtier (8).

12. Système optique (2) selon l'une des quelconques revendications précédentes,
dans lequel le premier élément optique (3) présente une lentille optique (30), de préférence une lentille Fresnel, dans lequel la lentille (30) est retenue de préférence dans un support pour lentille (31) et dans lequel le support pour lentille (31) présente, en outre de préférence, les broches de guidage (32) du premier élément optique (3) et/ou dans lequel le second élément optique (4) est une vitre de dispersion (40), de préférence une vitre de diffusion, dans lequel la vitre de diffusion (40) est retenue de préférence dans un support (41) et dans lequel le support (41) présente en outre de préférence les broches de guidage (42) du second élément optique (4).

13. Système d'éclairage (1) présentant un projecteur (S), de préférence un projecteur à DEL et un système optique (2) selon l'une des quelconques revendications précédentes, dans lequel le système d'optique (2) est disposé par rapport au projecteur (S) de sorte que, de préférence, ils soient reliés ensemble par le biais d'une section de fixation (20), que la lumière du projecteur (S), en direction de l'axe de rayonnement lumineux (A), traverse d'abord le second élément optique (4) puis ensuite le premier élément optique (3).

14. Procédé de réglage d'une caractéristique d'émission lumineuse d'un projecteur (S) d'un système d'éclairage (1) présentant les étapes suivantes :
• préparation d'un système d'éclairage (1) selon la revendication 13,
• actionnement du mécanisme de réglage (5), de préférence par rotation relative de l'élément de guidage (6) et de l'élément de retenue (7), de manière à ce que les éléments optiques (3, 4) se situent entre la position écartée et la position voisine et, lorsque les éléments optiques (3, 4) se trouvent dans la position voisine, à ce que ceux-ci soient déplacés ensemble, sélectivement en conservant la position voisine, le long de l'axe de rayonnement lumineux (A).

15. Procédé selon la revendication 14,
dans lequel seul le second élément optique (4) est déplacé, pour déplacer les éléments optiques (3, 4) entre la position écartée et la position voisine, de préférence par rapport au projecteur (S) sélectivement en s'éloignant ou en s'approchant de celui-ci et/ou dans lequel, lorsque les deux éléments optiques (3, 4) se déplacent ensemble tout en conservant la position voisine le long de l'axe de rayonnement lumineux (A), les deux éléments optiques (3, 4) sont déplacés par rapport au projecteur (S) sélectivement en s'éloignant ou en s'approchant de celui-ci.
